# FASCICULE DE BREVET EUROPEEN

(11) **EP 2 326 892 B1**
(45) Date de publication et mention de la délivrance du brevet: **28.03.2018**
(21) Numéro de dépôt: 09748420.8
(22) Date de dépôt: 22.09.2009
(51) Int. Cl.: F25B 25/02, F25B 15/14, B60H 1/32

(54) **DISPOSITIF DE CLIMATISATION PAR ABSORPTION PERFECTIONNE POUR VEHICULE AUTOMOBILE**
VERBESSERTE VORRICHTUNG ZUR LUFTKLIMATISIERUNG DURCH ABSORPTION FÜR EIN KRAFTFAHRZEUG
IMPROVED ABSORPTION AIR-CONDITIONING DEVICE FOR AN AUTOMOBILE

(30) Priorité: 26.09.2008 FR 0856504
(43) Date de publication de la demande: 01.06.2011
(73) Titulaire: PSA Automobiles SA, 78300 Poissy (FR)
(72) Inventeur: BOUDARD, Emmanuel, F-78960 Voisins Le Bretonneux (FR); BRUZZO, Vital, I-35131 Padova (IT)
(74) Mandataire: Fernandez, Francis Lionel
(86) Numéro de dépôt international: PCT/FR2009/051781
(87) Numéro de publication internationale: WO 2010/034929

(56) Documents cités:
- WO-A-2007/144024
- DE-A1- 4 415 199
- DE-C- 668 922
- GB-A- 223 395
- JP-A- 4 106 374
- US-A- 1 788 114
- US-A- 4 031 712

## Description

La présente invention concerne un dispositif de climatisation par absorption perfectionné pour véhicule automobile.

Elle concerne également un véhicule automobile, équipé d'un tel dispositif de climatisation perfectionné.

Un dispositif de climatisation par absorption comprend, de manière schématique, un élément dans lequel s'effectue la désorption, désigné « désorbeur » dans la suite du texte, un absorbeur, un condenseur et un évaporateur. Pour fonctionner, le désorbeur et l'absorbeur sont remplis d'un mélange d'au moins deux substances miscibles formé par un fluide réfrigérant et un fluide absorbant. Ce mélange est combiné dans l'absorbeur, dans lequel l'absorption du fluide réfrigérant par le fluide absorbant a lieu. Le fluide réfrigérant et le fluide absorbant ont une pression d'évaporation suffisamment différente pour que, lorsque le désorbeur est chauffé, le plus volatil des deux, soit le fluide réfrigérant, s'évapore et se transforme en un liquide dans le condenseur.

On a déjà cherché à améliorer les performances des systèmes de climatisation par absorption utilisés, notamment, dans les véhicules automobiles. Ainsi, par exemple, le document US 2005/0268633 A1 décrit un système de refroidissement à sorption pour fournir de l'air frais à l'intérieur de l'habitacle d'un véhicule automobile. Il comprend un évaporateur, un condenseur en communication fluidique avec l'évaporateur, et plusieurs bancs d'absorption également en communication fluidique avec l'évaporateur et le condenseur. Chaque banc d'absorption comporte un boîtier imperméable aux fluides, des couches déshydratantes ayant des ouvertures traversantes, une voie d'écoulement de mélange réfrigérant pour faire circuler un mélange réfrigérant à proximité d'un premier côté des couches déshydratantes, et une voie d'écoulement de liquide de refroidissement pour faire circuler un liquide de refroidissement à proximité d'un second côté des couches déshydratantes. Les ouvertures traversantes font partie d'une des voies d'écoulement du mélange réfrigérant et du liquide de refroidissement.

On a également apporté des améliorations à des dispositifs de climatisation, qui contribuent à réduire les dimensions du système de refroidissement. Le dispositif, dans ce cas, comporte une conduite d'alimentation en réfrigérant par laquelle de le réfrigérant, qui est de l'eau pure, est fourni à un élément cible à refroidir, et un organe d'élimination des impuretés placé dans une conduite d'élimination d'impuretés qui est une conduite différente de la conduite d'alimentation en réfrigérant.

Enfin, à titre d'exemple également, le document WO 01/18462 A1 décrit une amélioration apportée à un échangeur de chaleur tubulaire. La surface d'échange de chaleur des tubes de transfert est modifiée par polymérisation du plasma de façon à être hydrophile. L'échangeur comporte un condenseur par absorption et une pompe à chaleur par absorption utilisant l'échangeur de chaleur pour améliorer le transfert de chaleur d'une climatisation. Il se forme un film de plasma polymérisé sur les tubes de transfert de chaleur. Le film de plasma polymérisé est applicable à un tube simple ou usiné du condenseur, de l'évaporateur et de l'absorbeur qui comprend un condenseur par absorption et une pompe à chaleur par absorption.

Le but de la présente invention est de fournir un dispositif de climatisation par absorption adapté aux véhicules automobiles, qui soit perfectionné dans son fonctionnement par rapport aux systèmes connus de climatisation ou de refroidissement par absorption de l'art antérieur.

Un autre but de la présente invention est de fournir un tel dispositif de climatisation par absorption, qui soit de conception simple et dont la réalisation nécessite des moyens technologiques peu coûteux.

Pour parvenir à ces buts, la présente invention a pour objet un dispositif de climatisation par absorption perfectionné pour véhicule automobile conforme au préambule de la revendication 1 reprenant l'enseignement des documents DE4415199A et US-A-4031712.

L'invention est caractérisée par la partie caractérisante de la revendication 1.

Toutefois, selon un mode plus avantageux de réalisation de l'invention, on peut rendre la réaction d'absorption plus efficace par la création d'un plasma de vapeur d'eau.

Selon le mode préféré de réalisation de l'invention également, le dispositif de climatisation comporte au moins un système d'échange avec membrane osmotique, de type à tube et membrane osmotique.

De préférence, ledit système d'échange avec membrane osmotique est situé proche du réservoir de solution, le tuyau principal en matériau de membrane osmotique dudit système d'échange formant un des côtés du réservoir de solution, de manière à réduire le volume dudit système.

De préférence également, il peut être prévu aussi une zone d'échange osmotique proche de l'absorbeur, à savoir en amont ou le long de l'absorbeur.

Enfin, il peut être prévu une zone d'échange osmotique venant d'une altitude déterminée du réservoir de réfrigérant déterminant une concentration critique de la solution du système à l'arrêt vers le circuit de solution et le réservoir de solution, le débit à travers la membrane osmotique étant faible en regard des capacités de condensation de la machine.

La présente invention a également pour objet un véhicule automobile, qui comporte un dispositif de climatisation par absorption perfectionné conforme à celui décrit ci-dessus dans ses grandes lignes.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 représente, de manière schématique, le principe de fonctionnement d'une climatisation par absorption,
- la figure 2 représente, de manière schématique, le circuit fonctionnel d'un autre exemple d'un dispositif de climatisation par absorption perfectionné,

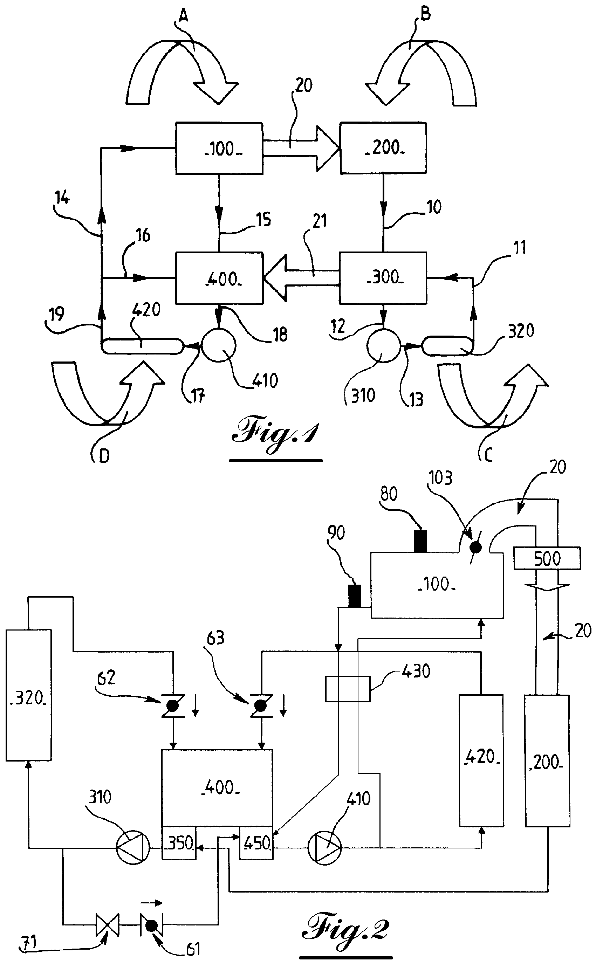

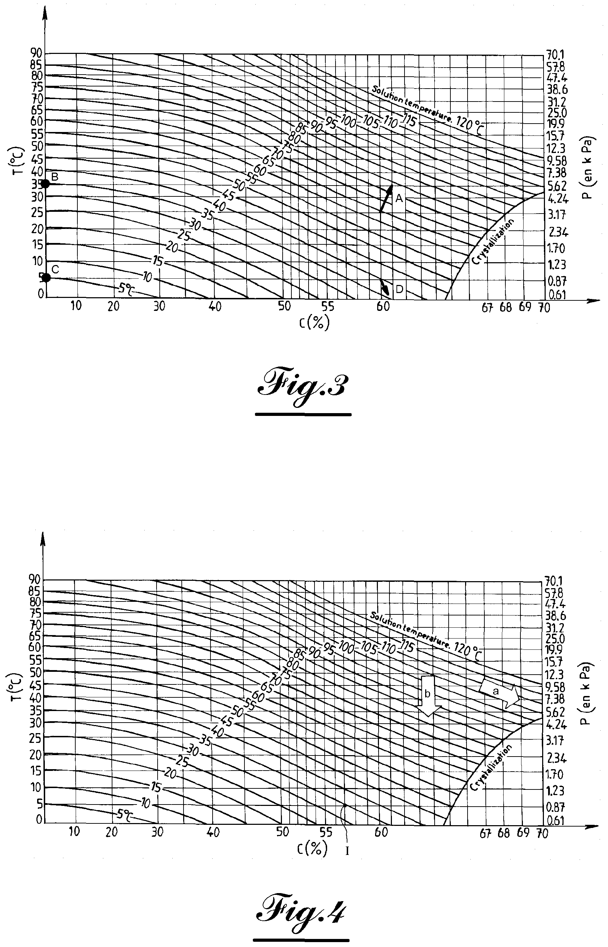

- la figure 3 est un diagramme « Températures - Pressions - Concentrations (de la solution)», dit « diagramme de Stoecker », pour la compréhension des phénomènes intervenants dans les réaction de désorption et d'absorption,
- la figure 4 est également un diagramme « Températures - Pressions - Concentrations (de la solution)», dit « diagramme de Stoecker », pour la compréhension de différents résultats techniques de la présente invention,
- la figure 5 représente, de manière schématique, le circuit fonctionnel d'un dispositif de climatisation par absorption perfectionné, selon la présente invention, et
- la figure 6 représente, de manière schématique, le circuit fonctionnel d'un autre exemple d'un dispositif de climatisation par absorption.
En référence au dessin de la figure 1 et au graphe de la figure 3, on a représenté, de manière schématique, les éléments constitutifs et le principe de fonctionnement d'un dispositif de climatisation par absorption. Il comprend, de manière classique, un désorbeur 100, un condenseur 200, un évaporateur 300 et un absorbeur 400. Un fluide chaud, comme le liquide de refroidissement moteur du véhicule apporte la chaleur nécessaire à la séparation d'un fluide réfrigérant (apport illustré schématiquement par la flèche A), par exemple de la vapeur d'eau, et d'un fluide absorbant ou solution saline, par exemple une solution de bromure de lithium (LiBr).

L'eau sous forme de vapeur est alors amenée par la canalisation 20 dans le condenseur 200 pour être condensée par l'action de refroidissement de l'air extérieur (apport de refroidissement schématiquement illustré par le point B). L'eau en phase liquide est amenée par la canalisation 10 vers l'évaporateur 300. Le froid produit lors de l'évaporation est transmis à l'habitacle du véhicule (non représenté), comme schématiquement illustré par le point C. A cette fin, il est prévu une pompe 310 et un aérotherme 320, qui sont reliés à l'évaporateur 300 par les canalisations 11, 12 et 13. L'ensemble des canalisations 10 à 13 forme le circuit d'eau sous phase liquide. La vapeur d'eau qui sort de l'évaporateur 300 est amenée dans l'absorbeur 400 par le conduit 21 qui est formé de fait par l'enveloppe de l'ensemble absorbeur/évaporateur. La solution est refroidie par de l'air extérieur pour absorber la vapeur d'eau (apport de refroidissement schématiquement illustré par la flèche D). A cette fin, il est prévu une pompe 410 et un radiateur 420, qui sont reliés à l'absorbeur 400 par les canalisations 16, 17, 18 et 19. L'absorbeur 400 est relié au désorbeur 100 par les canalisations 14, 15 et 16. L'ensemble des canalisations 14 à 19 forme le circuit de solution saline.

Le graphe ou diagramme de la figure 3 est la représentation des phénomènes décrits ci-dessus d'absorption, de condensation, et d'évaporation au cours d'un cycle standard, qui sont référencés respectivement A, B et C sur la figure 3.

En référence au dessin de la figure 2, on a représenté, de manière schématique, le circuit fonctionnel d'un autre exemple d'une climatisation par absorption. Il s'agit d'une machine à absorption qui utilise le couple LiBr-eau (Bromure de lithium et eau). Les éléments du circuit identiques ou similaires à des éléments de la figure 1 sont désignés, le plus souvent, par la même référence numérique. Les références 100, 200 et 400 désignent respectivement le désorbeur, le condenseur du réfrigérant et l'ensemble absorbeur/évaporateur. Les références 320 et 420 désignent respectivement l'aérotherme de réfrigérant et le radiateur de la solution. Les références 310 et 410 désignent respectivement la pompe du circuit de réfrigérant et la pompe du circuit de la solution. Les références 350 et 450 désignent la réserve de réfrigérant et la réserve de solution, respectivement. La vanne 103, située dans la canalisation 20 qui relie le désorbeur 100 au condenseur 200, permet de réguler la concentration plus rapidement que par régulation de la puissance apportée au désorbeur 100. La vanne 103 permet également de s'affranchir d'une régulation de la capacité d'échange du condenseur 200. Les références 61, 62 et 63 désignent des clapets anti-retour, et la référence 71 une vanne actionnée électriquement. La référence 80 désigne un capteur de pression, et la référence 90 un capteur de température. La référence 430 désigne un échangeur de chaleur entre la solution montante et la solution descendante.

Selon cet exemple, un ventilateur 500 est intercalé entre le désorbeur 100 est le condenseur 200. Ce ventilateur 500 permet de créer un différentiel de pression supplémentaire entre le désorbeur 100 et le condenseur 200. A l'inverse d'un compresseur qui provoque par aspiration l'évaporation, ce ventilateur ne doit que créer un différentiel de pression entre les deux organes 100 et 200.

Le ventilateur 500 a des effets au niveau du désorbeur : l'énergie principale du système par absorption restant la source chaude, c'est-à-dire le circuit d'eau du moteur, la pression d'évaporation peut être légèrement diminuée. Il en résulte, comme représenté sur le diagramme de la figure 4, que les concentrations de la solution peuvent augmenter (flèche « a » de la figure 4).

A l'inverse, on peut garder le même niveau de concentration objectif et baisser la température de chauffe, comme le montre la flèche « b » du diagramme de la figure 4.

Le ventilateur a également des effets au niveau du condenseur. En effet, la pression au niveau du condenseur peut légèrement augmenter. Il en résulte que la température de condensation augmente et l'échange avec l'air extérieur est amélioré.

On notera également que l'augmentation de pression peut permettre d'avoir, dans des conditions froides, un déplacement plus facile du liquide condensé.

La variation de pression nécessaire pour améliorer le fonctionnement peut être de très faible valeur, le réfrigérant étant de l'eau à basse pression. A une température ambiante de 45°C, une faible variation de pression de 10mbar, soit 1000 Pascal permet :
- de baisser la température de la source chaude de 109°C à 105°C (puissance absorbée 6000W),
- ou bien d'augmenter la température de condensation de 1,5°C de 50,2°C à 51,7°C (puissance de condensation 4500W) pour améliorer le rendement de l'échangeur,
- ou bien encore de baisser le régime de ventilation de 29% pour le condenseur (puissance du ventilateur de 250W à 1000W).

Les débits massiques de vapeur d'eau sur ces points de fonctionnement sont très faibles : aux alentours de 6,7 kg/h, soit 1,86 g/s. Sous basse pression, les débits peuvent être importants, compris entre 75 m³/h environ et 150 m³/h environ. Par rapport aux autres puissances mises en jeu, la puissance de la variation de pression envisagée est faible : entre 20 et 50W.

Un autre perfectionnement selon la présente invention est réalisé par l'utilisation d'un plasma dans l'absorbeur. L'absorbeur peut être, à titre d'exemple, un absorbeur à plaques verticales parallèles, bien que le présent perfectionnement s'applique mutatis mutandis à toute géométrie d'absorption.

Par « plasma », on entend, de manière classique, un gaz ionisé, dans lequel se trouvent des molécules de gaz neutres et des fragments de celles-ci, des électrons libres et des cations, un fait qui rend le gaz conducteur. Il s'y ajoute un grand nombre de molécules excitées qui retombent dans leur état initial en émettant un rayonnement électromagnétique.

La réaction d'absorption est réaction d'équilibre thermochimique. Pour une concentration donnée de solution saline, une température donnée et sous une pression donnée, la solution absorbante émet et absorbe des molécules de réfrigérant en quantités déterminées. Lorsque la quantité de molécules absorbées est égale à la quantité de molécules émises, on atteint un état d'équilibre, qui se traduit sous forme de diagramme de vapeur saturante (figure 3).

Par exemple, en référence au diagramme de la figure 3, à titre d'exemple, avec une solution 57% de concentration massique de Bromure de Lithium et une température de 35°C, la pression est de 0,87 kPa, soit 8,7 mbar (point « I » de la figure 4).

Dans un ensemble constitué par un absorbeur et un évaporateur fonctionnant avec du bromure de lithium et de l'eau, l'eau évaporée étant absorbée par la solution saline, deux facteurs favorisent l'absorption : la surface dédiée à l'absorption, et la concentration de la solution.

Ces deux paramètres sont utilisés, de manière conventionnelle, pour dimensionne les absorbeurs et évaporateurs.

Un autre paramètre peut être utilisé : on peut créer, une différence de pression entre la zone d'évaporation et la zone d'absorption, de manière analogue à ce qui est décrit précédemment pour l'ensemble désorbeur et condenseur. La différence de pression créée permet d'obtenir une augmentation des performances d'absorption, et, en conséquence, une diminution de la surface des plaques installées.

Selon le principe de la présente invention, les performances de l'absorption sont augmentées de manière efficace en créant un plasma de vapeur d'eau. Les conditions de pression, inférieures à 18 mbar, s'y prêtant particulièrement bien dans le cadre d'une climatisation par absorption. A la base dans un absorbeur fonctionnant à 8°C, le nombre de chocs entre les molécules d'eau et la solution donnant lieu à absorption est seulement de 0.61% : seuls 6 contacts de molécules sur 1000 donnent lieu à réaction. Le plasma fait croître la réactivité des molécules de vapeur d'eau d'un ordre 10 environ, ce qui a pour résultat une plus grande probabilité de réaction entre les molécules de vapeur d'eau et la solution d'absorption.

Lors de la formation du plasma, les molécules d'eau sont soumises à un champ électrique intense, ce qui change l'état d'équilibre de la réaction. Le nombre de molécules de vapeur d'eau qui rencontrent un site de fixation disponible augmente.

La création du plasma de vapeur d'eau a pour résultat de permettre une diminution de la surface destinée à absorber les molécules d'eau. Dans le cas, par exemple, d'une climatisation par absorption avec un absorbeur à plaques où il n'y a pas de surface destinée à réaliser un échange thermique, la diminution des surfaces parallèles des plaques permet des gains de volume importants sur l'absorbeur.

Un autre perfectionnement selon le principe de la présente invention consiste à utiliser un ou plusieurs systèmes d'échange avec des membranes osmotiques. L'osmose est le passage de l'eau du milieu le moins concentré vers le plus concentré au travers d'une membrane semi-perméable : la membrane osmotique.

Une membrane osmotique est perméable à l'eau, mais pas aux molécules plus importantes, notamment aux molécules du sel absorbant. Dans une application de type climatisation par absorption, les faibles pressions utilisées font diminuer les contraintes sur ces membranes ces membranes peuvent alors être réalisées en films de fibres de polyéthylène ou de polypropylène intissés, qui présentent une bonne tenue mécanique, une faible conductivité thermique et qui sont très économiques.

En référence de nouveau à la figure 2, le clapet anti-retour 61 a pour fonction d'éviter le mélange entre la solution absorbante et l'eau lors de l'ouverture de la vanne 71. Le positionnement du tube de décristallisation, qui sert aussi à baisser la concentration de la solution absorbante, est limité par les pressions génératrices des pompes. De plus, le système étant mécanique, en cas d'arrêt intempestif des pompes, il n'y a aucune possibilité de protéger le système de la cristallisation du sel.

L'utilisation d'une membrane osmotique permet de se libérer du clapet anti-retour et libère le positionnement du tube de décristallisation. La pression génératrice est formée alors par la différence de concentration de sel. Le sel, de plus, ne risque plus de refluer dans la zone d'eau condensée.

La pression génératrice créée d'un côté par la solution saline et de l'autre côté par l'eau condensée est une pression de plusieurs bars. On peut donc placer le tube en tout point du circuit tant que celui-ci reste rempli d'eau et de solution.

Pour spécifier une concentration maximale à ne pas dépasser à l'arrêt, même dans le cas où le système est mis en défaut sur le plan électrique, on peut positionner la zone de pompage à la hauteur d'eau correspondant à une concentration de solution donnée sans risque pour le système par exemple 58% de concentration massique de Bromure de Lithium, puisque les volumes finis dans le système impliquent qu'à chaque concentration saline corresponde un volume d'eau déterminé.

Le système étant de plus peu perméable, il n'y a pas de risque de passage de gaz intempestif entre des zones de haute et de basse pression, susceptible de générer un disfonctionnement.

Le condenseur 200 à l'arrêt du dispositif peut être partiellement rempli d'eau. La solution contenue dans le désorbeur en refroidissant risque de provoquer l'évaporation de cette eau et générer de la glace. Cette glace peut former un bouchon susceptible d'empêcher la remise en route rapide du dispositif, ou bien même d'endommager le condenseur 200.

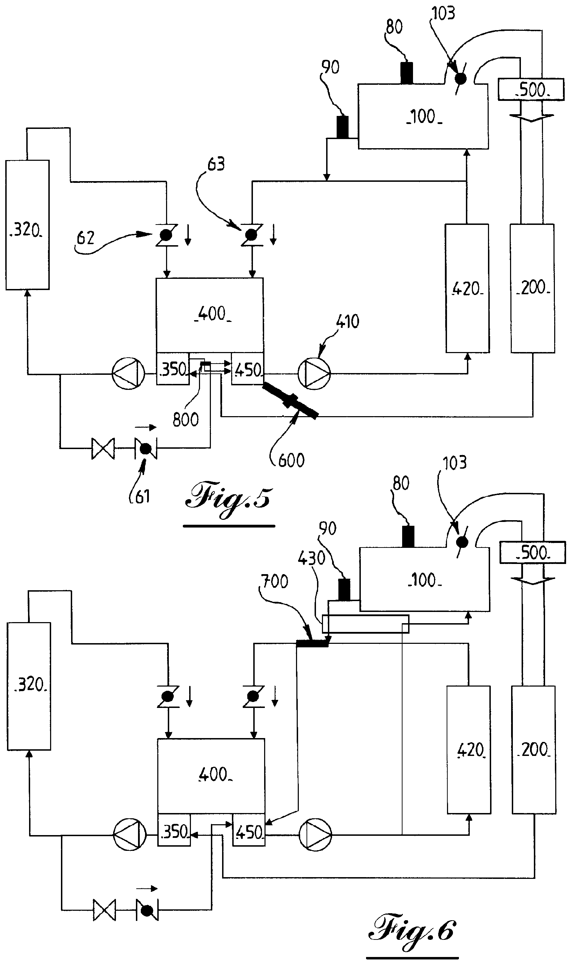

Afin de réduire ce risque, on a modifié le circuit en ajoutant un tube et une membrane de faible surface, de référence commune 600 sur le schéma de la figure 5.

La membrane permet de laisser passer un débit faible de réfrigérant, par exemple un débit de l'ordre de 0,1 l/h, sans trop déséquilibrer la machine qui produit 6 à 10 kg/h d'eau condensée.

Comme illustré très schématiquement sur la figure 5, il y a une proximité du tuyau de condensation vers le réservoir de solution 450. Le dispositif peut donc être de volume très réduit, par exemple sous la forme du tuyau principal en matériau de membrane osmotique formant un des côtés du réservoir de solution 450.

Selon certains modes de réalisation du dispositif de climatisation, il est prévu un retour de la solution riche du désorbeur 100 vers le réservoir de solution 450. Du fait que le retour vers le désorbeur 100 est situé en aval de la pompe, la concentration de la solution envoyée au désorbeur 100 n'est pas optimale, parce qu'elle est plus importante que la concentration minimale du circuit.

Par contre, ces modes de réalisation présentent certains avantages : meilleur fonctionnement de la descente, absence de réchauffage de la solution entrante dans l'absorbeur, etc.

Pour remédier au défaut mentionné ci-dessus de ces modes de réalisation, il suffit de prévoir une zone d'échange osmotique, référencée 700 sur le dessin de la figure 6, avec le minimum d'échange thermique en amont ou le long de l'absorbeur 400.

La présente invention offre de nombreux avantages, parmi lesquels les avantages suivants :
- elle permet, avec des moyens technologiques simples et peu coûteux, d'améliorer le fonctionnement du dispositif de climatisation par absorption adapté à un véhicule automobile,
- elle permet de réduire le volume du dispositif, en particulier de l'absorbeur.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de climatisation par absorption perfectionné notamment pour véhicule automobile, du type comprenant un désorbeur (100), un absorbeur (400), un condenseur (200) et un évaporateur, le désorbeur (100) et l'absorbeur (400) étant remplis d'un mélange d'au moins deux substances miscibles formé par un fluide réfrigérant et un fluide absorbant, lequel mélange étant combiné dans l'absorbeur (400), dans lequel l'absorption du fluide réfrigérant par le fluide absorbant a lieu, et dans lequel un ventilateur (500) formant moyen d'augmenter le différentiel de pression est placé entre le désorbeur (100) et le condenseur (200), de façon à augmenter légèrement la pression au niveau du condenseur (200) et/ou baisser légèrement la pression du désorbeur (100) et améliorer, ainsi, le fonctionnement du dispositif de climatisation, **caractérisé en ce qu'**il comporte au moins un système d'échange avec membrane osmotique (600) reliant le circuit de solution au circuit de liquide condensé, constitué d'un tube et d'une membrane osmotique, et **en ce que** le débit à travers la membrane osmotique est faible en regard des capacités de condensation de la machine.

2. Dispositif de climatisation selon la revendication 1, **caractérisé en ce que** la réaction d'absorption est rendue plus efficace par la création d'un plasma de vapeur d'eau entre la zone d'évaporation et la zone d'absorption de l'absorbeur (400).

3. Dispositif de climatisation selon la revendication 1, **caractérisé en ce que** ledit système d'échange avec membrane osmotique (600) est situé proche du réservoir de solution (450), le tuyau principal en matériau de membrane osmotique dudit système d'échange formant une partie d'un des côtés du réservoir de solution (450), de manière à réduire le volume dudit système.

4. Dispositif de climatisation selon l'une quelconque des revendications 1 à 3, **caractérisé en ce qu'**il est prévu une zone d'échange osmotique (700) proche de l'absorbeur (400), à savoir en amont ou le long de l'absorbeur (400).

5. Dispositif de climatisation selon l'une quelconque des revendications 1 à 4, **caractérisé en ce qu'**il est prévu une zone d'échange osmotique venant d'une altitude déterminée du réservoir de réfrigérant (350) déterminant une concentration critique de la solution du système à l'arrêt vers le circuit de solution et le réservoir de solution (450), et **en ce que** le débit à travers la membrane osmotique est faible en regard des capacités de condensation de la machine.

6. Véhicule automobile, **caractérisé en ce qu'**il comporte un dispositif de climatisation par absorption conforme à l'une quelconque des revendications 1 à 5.

## Patentansprüche

1. Optimierte Vorrichtung zur Klimatisierung durch Absorption, vor allem für ein Kraftfahrzeug, des Typs, der einen Desorber (100), einen Absorber (400), einen Kondensator (200) und einem Verdampfer umfasst, wobei der Desorber (100) und der Absorber (400) mit einem Gemisch aus mindestens zwei mischbaren Stoffen gefüllt sind, das von einem Kältemittelfluid und einem Absorptionsfluid gebildet wird, wobei das Gemisch im Absorber (400) zusammengeführt wird, in dem das Absorbieren des Kältemittelfluids durch das Absorptionsfluid stattfindet, und wobei ein Lüfter (500), der ein Mittel zum Erhöhen der Druckdifferenz bildet, zwischen dem Desorber (100) und dem Kondensator (200) platziert ist, um den Druck auf Ebene des Kondensators (200) leicht zu erhöhen und/oder den Druck des Desorbers (100) leicht zu senken und so die Funktionsweise der Vorrichtung zur Klimatisierung zu verbessern, **dadurch gekennzeichnet, dass** sie mindestens ein Austauschsystem mit osmotischer Membran (600) umfasst, das den Lösungskreislauf mit dem Kondensflüssigkeitskreislauf verbindet, das aus einem Rohr und einer osmotischen Membran besteht, und dadurch, dass der Durchsatz durch die osmotische Membran hindurch im Vergleich zu den Kondensationskapazitäten der Anlage gering ist.

2. Vorrichtung zur Klimatisierung nach Anspruch 1, **dadurch gekennzeichnet, dass** die Absorptionsreaktion durch das Erzeugen eines Wasserdampfplasmas zwischen der Verdampfungszone und der Absorptionszone des Absorbers (400) effizienter gemacht wird.

3. Vorrichtung zur Klimatisierung nach Anspruch 1, **dadurch gekennzeichnet, dass** das Austauschsystem mit osmotischer Membran (600) nahe dem Lösungsbehälter (450) liegt, wobei die Hauptleitung aus osmotischem Membranmaterial des Austauschsystems einen Teil einer der Seiten des Lösungsbehälters (450) bildet, um das Volumen des Systems zu verringern.

4. Vorrichtung zur Klimatisierung nach einem der Ansprüche 1 bis 3, **dadurch gekennzeichnet, dass** nahe dem Absorber (400), nämlich stromaufwärts oder entlang des Absorbers (400), eine osmotische Austauschzone (700) vorgesehen ist.

5. Vorrichtung zur Klimatisierung nach einem der Ansprüche 1 bis 4, **dadurch gekennzeichnet, dass** eine osmotische Austauschzone vorgesehen ist, die aus einer bestimmten Höhe des Kältemittelbehälters (350) kommt, die eine kritische Konzentration der Lösung des Systems bei Stillstand zum Lösungskreislauf und dem Lösungsbehälter (450) hin bestimmt, und dadurch, dass der Durchsatz durch die osmotische Membran hindurch im Vergleich zu den Kondensationskapazitäten der Anlage gering ist.

6. Kraftfahrzeug, **dadurch gekennzeichnet, dass** es eine Vorrichtung zur Klimatisierung durch Absorption gemäß einem der Ansprüche 1 bis 5 umfasst.

## Claims

1. Improved absorption air-conditioning device in particular for an automobile, of the type that comprises a desorber (100), an absorber (400), a condenser (200) and an evaporator, with the desorber (100) and the absorber (400) being filled with a mixture of at least two miscible substances formed by a coolant fluid and an absorbing fluid with said mixture being combined in the absorber (400), wherein the absorption of the coolant fluid by the absorbing fluid takes place, and wherein a fan (500) forming a means for increasing the pressure difference is placed between the desorber (100) and the condenser (200), so as to slightly increase the pressure at the condenser (200) and/or slightly decrease the pressure of the desorber (100) and improve, as such, the operation of the air-conditioning device, **characterised in that** it comprises at least one exchange system with an osmotic membrane (600) connecting the solution circuit to the condensed liquid circuit, comprised of a tube and of an osmotic membrane, and **in that** the flow rate through the osmotic membrane is low with respect to the condensation capacities of the machine.

2. Air-conditioning device according to claim 1, **characterised in that** the absorption reaction is made more effective by the creation of a plasma of water vapour between the evaporation zone and the absorption zone of the absorber (400).

3. Air-conditioning device according to claim 1, **characterised in that** said exchange system with an osmotic membrane (600) is located close to the solution reservoir (450), with the main pipe made of osmotic membrane material of said exchange system forming a portion of one of the sides of the solution reservoir (450), in such a way as to reduce the volume of said system.

4. Air-conditioning device according to any of claims 1 to 3, **characterised in that** an osmotic exchange zone (700) is provided close to the absorber (400), namely upstream or along the absorber (400).

5. Air-conditioning device according to any of claims 1 to 4, **characterised in that** an osmotic exchange zone is provided coming from a determined altitude of the coolant reservoir (350) determining a critical concentration of the solution of the system when stopped to the solution circuit and the solution reservoir (450), and **in that** the flow rate through the osmotic membrane is low with respect to the condensation capacities of the machine.

6. Automobile, **characterised in that** it comprises an absorption air-conditioning device in accordance with any of claims 1 to 5.
